# EUROPEAN PATENT APPLICATION

(11) **EP 4 737 755 A1**
(43) Date of publication of application: **06.05.2026**
(21) Application number: 24210976.7
(22) Date of filing: 05.11.2024
(51) Int. Cl.: F16D 51/00, F16D 65/22, F16D 66/02, F16D 125/30

(54) **DETECTING OVERADJUSTMENT OF DRUM BRAKE**

(71) Applicant: Volvo Truck Corporation, 405 08 Göteborg (SE)
(72) Inventor: WIPPEL, Daniel, 80430100 CURITIBA (BR); TRAVAGLIA, Carlos Abilio, 82200-300 CURITIBA (BR); MIRANDA, Eduardo, 80730300 CURITIBA (BR)
(74) Representative: Kransell & Wennborg KB

(57) **Abstract**

A computer system (11) comprising processing circuitry (13) configured to: receive a set of indications, including an indication (15) of a torque (T) provided to an S-cam (29) of a drum brake (7), and an indication (17) of an angular displacement (β) of the S-cam (29) resulting from the provided torque (T); determine, based on the set of indications, that the torque (T) is higher than a predefined threshold torque (T_{TH}) indicating contact between a brake lining (33a-b) of a brake shoe (31a-b) actuated by the S-cam (29) and an inner surface (37) of a brake drum (35), and the angular displacement (β) resulting from the provided torque (T) is less than a predefined threshold angular displacement ((β_{TH}) expected to result in contact between the brake lining (33a-b) and the inner surface (37) of the brake drum (35); and provide a signal (19) indicating that the drum brake (7) may have been overadjusted.

## Description

### TECHNICAL FIELD

The disclosure relates generally to monitoring of a drum brake. In particular aspects, the disclosure relates to detection of overadjustment of a drum brake. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

To maintain proper operation of a drum brake over the service life of the brake linings, the starting position of the S-cam may be continuously adjusted. For various reasons, such adjustment may result in insufficient clearance between the brake linings of the brake shoes and the inner surface of the brake drum. This is referred to as "overadjustment, and may result in overheating of the drum brake.

It would be desirable to be able to detect overadjustment during operation of the vehicle equipped with the drum brake.

### SUMMARY

According to a first aspect of the disclosure, there is provided a computer system comprising processing circuitry configured to: receive a set of indications, including an indication of a torque provided to an S-cam of a drum brake, and an indication of an angular displacement of the S-cam resulting from the provided torque; determine, based on the set of indications, that the torque is higher than a predefined threshold torque indicating contact between a brake lining of a brake shoe actuated by the S-cam and an inner surface of a brake drum, and the angular displacement resulting from the provided torque is less than a predefined threshold angular displacement expected to result in contact between the brake lining and the inner surface of the brake drum; and provide a signal indicating that the drum brake may have been overadjusted. The first aspect of the disclosure may seek to enable detection of overadjustment of a drum brake during operation of the vehicle equipped with the drum brake. A technical benefit may include that a signal can be provided, to alert an operator that the drum brake needs to be checked, and may need to be adjusted. Hereby, it may be possible to prevent or at least limit overheating of the drum brake. The operator may be, for example, a driver or an autonomous driving system.

Examples of the present disclosure may mainly be useful for monitoring drum brakes of the kind with automatic adjustment of the brakes to compensate for wear of the brake linings of the brake shoes. As the brake linings wear out, the starting point for the S-cam (when no brake pressure is applied) may be automatically adjusted towards maintaining a substantially constant pre-defined clearance between the brake linings and the inner surface of the brake drum. If the adjustment does not result in the pre-defined clearance, but a larger clearance, the drum brake can be said to be "underadjusted". The result will be too large brake pedal travel when braking, resulting in longer reaction time. If the adjustment does not result in the pre-defined clearance, but a smaller clearance, the drum brake can be said to be "overadjusted". The result may be that the drum brake becomes more sensitive to, for example, temperature variations. If the brake becomes hot, for example after application of the brakes, the resulting clearance might become so small that there is at least intermittent contact between the brake linings and the inner surface of the brake drum, even when the brake pedal is not actuated. This can lead to more heat, and eventually overheated brakes. Through examples of the present disclosure, this latter situation can be detected, and a signal can be provided indicating that the drum brake may have been overadjusted.

Optionally in some examples, including in at least one preferred example, the processing circuitry may be configured to: compare the torque with the predefined threshold torque; and compare the angular displacement with a predefined threshold angular displacement.

Optionally in some examples, including in at least one preferred example, the indication of the torque provided to the S-cam may include an indication of an air pressure applied to an actuator configured to convert the applied air pressure to the torque provided to the S-cam; and the processing circuitry may be configured to determine that the torque is higher than the threshold torque indicating contact between the brake lining and the inner surface of the brake drum, by determining that the air pressure is higher than a predefined threshold pressure corresponding to the threshold torque. A technical benefit may include that air pressure is a convenient way of operating drum brakes, which is widely used. It may be relatively easy to determine that the air pressure is higher than a predefined threshold pressure. For example, the air pressure applied to the actuator may be measured, or a command indicative of an air pressure can be used as in indication of the actually applied air pressure.

Optionally in some examples, including in at least one preferred example, the processing circuitry may be configured to: compare the air pressure with the predefined threshold pressure.

Optionally in some examples, including in at least one preferred example, the indication of the angular displacement of the S-cam may include a signal from an angular sensor arranged to measure a rotational angle of the S-cam; and the processing circuitry may be configured to determine that the angular displacement is less than the predefined threshold angular displacement expected to result in contact between the brake lining and the inner surface of the brake drum, by determining that the rotational angle of the S-cam is greater than a predefined rotational angle. A technical benefit may include that an angular sensor may provide a compact, cost-efficient, and reliable way of acquiring an indication of the angular displacement of the S-cam.

Optionally in some examples, including in at least one preferred example, the processing circuitry may be configured to: compare the rotational angle with the predefined rotational angle.

Optionally in some examples, including in at least one preferred example, the angular sensor may be arranged to measure the rotational angle of the S-cam in relation to a reference angular position of the S-cam when no torque is provided to the S-cam; and the processing circuitry may be configured to determine that the angular displacement is less than the predefined threshold angular displacement expected to result in contact between the brake lining and the inner surface of the brake drum, by determining that the rotational angle of the S-cam is greater than a predefined rotational angle in relation to the reference angular position of the S-cam. For example, the reference angular position of the S-cam may be a starting position of the S-cam, when substantially no torque is provided to rotate the S-cam. This reference angular position may change during the life of the drum brake, for example as the drum brake may be adjusted to compensate for brake lining wear, as described further above. A technical benefit may include that measured angular displacement may be straight-forward to translate to a movement of the brake linings towards the inner surface of the brake drum. This may, in turn, provide for a reliable detection of potential overadjustment of the drum brake.

Optionally in some examples, including in at least one preferred example, the computer system according to examples of the first aspect may be included in a braking system, further comprising a drum brake including first and second brake shoes movable by rotation of an S-cam to push brake linings of the brake shoes towards an inner surface of a brake drum of the drum brake; a brake actuator controllable to rotate the S-cam; a torque indicating arrangement configured to provide an indication of a torque provided to the S-cam of the drum brake; an angular displacement indicating arrangement configured to provide an indication of an angular displacement of the S-cam. The computer system may be coupled to the torque indicating arrangement and the angular displacement indicating arrangement. Optionally, the computer system may also be coupled to the brake actuator, and the processing circuitry comprised in the computer system may optionally be configured to control the brake actuator to rotate the S-cam, in response to a received command to actuate the drum brake.

Optionally in some examples, including in at least one preferred example of the braking system, the brake actuator may comprises an air brake chamber, a push rod linearly movable by increasing an air pressure in the air brake chamber, and a lever arrangement coupled to the push rod and to the S-cam to convert linear movement of the push rod to rotation of the S-cam; and the torque indicating arrangement may be configured to provide an indication of the air pressure in the air brake chamber. A technical benefit may include that air pressure is a convenient way of operating drum brakes, which is widely used. It may be relatively easy to determine that the air pressure is higher than a predefined threshold pressure. For example, the air pressure applied to the actuator may be measured, or a command indicative of an air pressure can be used as in indication of the actually applied air pressure.

Optionally in some examples, including in at least one preferred example of the braking system, the angular displacement indicating arrangement may comprise an angular sensor arranged to measure a rotational angle of the S-cam. A technical benefit may include that an angular sensor may provide a compact, cost-efficient, and reliable way of acquiring an indication of the angular displacement of the S-cam.

The braking system according to examples of the present disclosure may advantageously be included in a vehicle, further comprising at least one vehicle wheel, wherein the braking system may be arranged to brake the at least one vehicle wheel.

According to a second aspect of the disclosure, there is provided a computer-implemented method comprising: receiving a set of indications, including an indication of a torque provided to an S-cam of a drum brake, and an indication of an angular displacement of the S-cam resulting from the provided torque; determining, based on the set of indications, that the torque is higher than a predefined threshold torque indicating contact between a brake lining of a brake shoe actuated by the S-cam and an inner surface of a brake drum, and the angular displacement resulting from the provided torque is less than a predefined threshold angular displacement expected to result in contact between the brake lining and the inner surface of the brake drum; and providing a signal indicating that the drum brake may have been overadjusted. The second aspect of the disclosure may seek to enable detection of overadjustment of a drum brake during operation of the vehicle equipped with the drum brake. A technical benefit may include that an signal can be provided, to alert an operator that the drum brake needs to be checked, and may need to be adjusted. Hereby, it may be possible to prevent or at least limit overheating of the drum brake. The operator may be, for example, a driver or an autonomous driving system.

Examples of the present disclosure may mainly be useful for monitoring drum brakes of the kind with automatic adjustment of the brakes to compensate for wear of the brake linings of the brake shoes. As the brake linings wear out, the starting point for the S-cam (when no brake pressure is applied) may be automatically adjusted towards maintaining a substantially constant pre-defined clearance between the brake linings and the inner surface of the brake drum. If the adjustment does not result in the pre-defined clearance, but a larger clearance, the drum brake can be said to be "underadjusted". The result will be too large brake pedal travel when braking, resulting in longer reaction time. If the adjustment does not result in the pre-defined clearance, but a smaller clearance, the drum brake can be said to be "overadjusted". The result may be that the drum brake becomes more sensitive to, for example, temperature variations. If the brake becomes hot, for example after application of the brakes, the resulting clearance might become so small that there is at least intermittent contact between the brake linings and the inner surface of the brake drum, even when the brake pedal is not actuated. This can lead to more heat, and eventually overheated brakes. Through examples of the present disclosure, this latter situation can be detected, and a signal can be provided indicating that the drum brake may have been overadjusted.

Optionally in some examples, including in at least one preferred example, the method may comprise: comparing the torque with the predefined threshold torque; and compare the angular displacement with a predefined threshold angular displacement.

Optionally in some examples, including in at least one preferred example, the indication of the torque provided to the S-cam may include an indication of an air pressure applied to an actuator configured to convert the applied air pressure to the torque provided to the S-cam; and the method may comprise determining that the torque is higher than the threshold torque indicating contact between the brake lining and the inner surface of the brake drum, by determining that the air pressure is higher than a predefined threshold pressure corresponding to the threshold torque. A technical benefit may include that air pressure is a convenient way of operating drum brakes, which is widely used. It may be relatively easy to determine that the air pressure is higher than a predefined threshold pressure. For example, the air pressure applied to the actuator may be measured, or a command indicative of an air pressure can be used as in indication of the actually applied air pressure.

Optionally in some examples, including in at least one preferred example, the method may comprise: comparing the air pressure with the predefined threshold pressure.

Optionally in some examples, including in at least one preferred example, the indication of the angular displacement of the S-cam may include a signal from an angular sensor arranged to measure a rotational angle of the S-cam; and the method may comprise determining that the angular displacement is less than the predefined threshold angular displacement expected to result in contact between the brake lining and the inner surface of the brake drum, by determining that the rotational angle of the S-cam is greater than a predefined rotational angle. A technical benefit may include that an angular sensor may provide a compact, cost-efficient, and reliable way of acquiring an indication of the angular displacement of the S-cam.

Optionally in some examples, including in at least one preferred example, the method may comprise: comparing the rotational angle with the predefined rotational angle.

Optionally in some examples, including in at least one preferred example, the angular sensor may be arranged to measure the rotational angle of the S-cam in relation to a reference angular position of the S-cam when no torque is provided to the S-cam; and the method may comprise determining that the angular displacement is less than the predefined threshold angular displacement expected to result in contact between the brake lining and the inner surface of the brake drum, by determining that the rotational angle of the S-cam is greater than a predefined rotational angle in relation to the reference angular position of the S-cam. For example, the reference angular position of the S-cam may be a starting position of the S-cam, when substantially no torque is provided to rotate the S-cam. This reference angular position may change during the life of the drum brake, for example as the drum brake may be adjusted to compensate for brake lining wear, as described further above. A technical benefit may include that measured angular displacement may be straight-forward to translate to a movement of the brake linings towards the inner surface of the brake drum. This may, in turn, provide for a reliable detection of potential overadjustment of the drum brake.

According to a third aspect of the disclosure, there is provided a computer program product comprising program code for performing, when executed by the processing circuitry, the method of the second aspect of the disclosure.

According to a fourth aspect of the disclosure, there is provided a non-transitory computer-readable storage medium comprising instructions, which when executed by the processing circuitry, cause the processing circuitry to perform the method of the second aspect of the disclosure.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary vehicle according to an example.
**FIG. 2A-B** are illustrations of a drum brake in different states.
**FIG. 3** is an exemplary computer system according to an example.
**FIG. 4** is an exemplary braking system according to an example.
**FIG. 5** is an exemplary method according to an example.
**FIG. 6** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

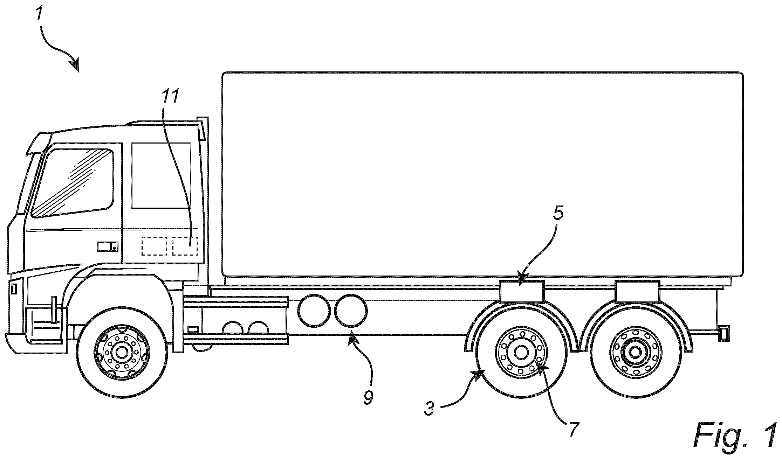

Fig. 1 is an exemplary vehicle 1 according to an example. Referring to Fig. 1, the exemplary vehicle 1 comprises vehicle wheels 3, an exemplary braking system 5 including drum brakes 7, and an air reservoir arrangement 9 for storing pressurized air for operation of the exemplary braking system 5. Operation of the braking system 5 may be controlled by a computer system 11.

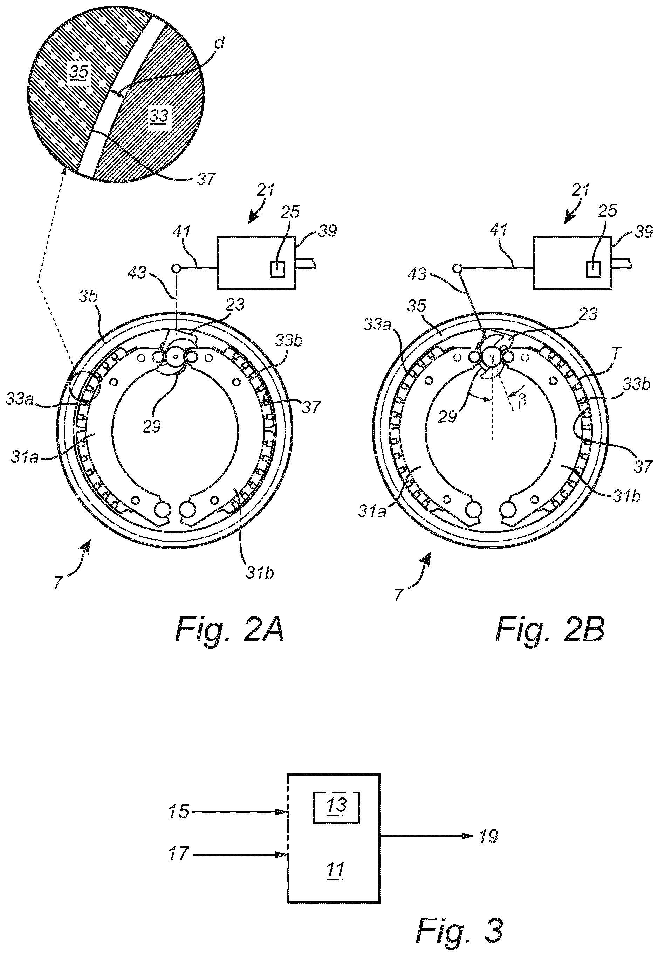

Fig. 2A-B are illustrations of a drum brake 7 in different states. Referring to Fig. 2A-B, the drum brake 7 comprises a first brake shoe 31a having a brake lining 33a, and a second brake shoe 31b having a brake lining 33b. The positions of the first 31a and second 31b brake shoes are controllable by rotating a so-called S-cam 29. As is shown in Fig. 2A-B, the first 31a and second 31b brake shoes, and the S-cam 29 are arranged inside a brake drum 35 having an inner surface 37.

When the drum brake 7 is not actuated, as is schematically shown in Fig. 2A, the S-cam 29 is at a reference angular position, which is indicated by 0° in Fig. 2A. As can be seen in Fig. 2A, the brake linings 33a-b of the brake shoes 31a-b are separated from the inner surface 37 of the brake drum 35 by a clearance distance d, and are thus not in contact with the inner surface 37 of the brake drum 35.

When it is desired to brake the vehicle 1, and the drum brake 7 is therefore actuated, as is schematically shown in Fig. 2B, torque is provided to the S-cam 29, causing the S-cam 29 to rotate and press the brake shoes 31a-b towards the brake drum 35, resulting in energy dissipation due to friction between the brake linings 33a-b and the inner surface 37 of the brake drum 35. As is indicated in Fig. 2B, a rotation of the S-cam, in relation to the reference angular position, by an angle β, resulted in the brake shoes 31 moving the clearance distance d towards the inner surface 37 of the brake drum 35.

As is schematically indicated in Fig. 2A-B, the rotation of the S-cam 29 is achieved by a brake actuator 21, and there is provided an angular displacement indicating arrangement 23, here in the form of an angular sensor arranged to measure the rotational angle β of the S-cam 23, in relation to the reference angular position. Furthermore, an exemplary torque indicating arrangement 25 is shown for providing an indication of the torque provided to the S-cam 29.

In the particular exemplary configuration in Fig. 2A-B, the brake actuator 21 is schematically indicated as comprising an air brake chamber 39, a push rod 41 linearly movable by increasing an air pressure P in the air brake chamber 39, and a lever arrangement 43 coupled to the push rod 41 and to the S-cam 29 to convert linear movement of the push rod 41 to rotation of the S-cam 29. The torque indicating arrangement 25 is here shown in the form of an air pressure sensor, configured to provide an indication 15 of the air pressure P in the air brake chamber 39. As an alternative, the indication 15 of the air pressure P in the air brake chamber 39 may be an indication of a pressure control parameter used to control supply of air to the brake chamber 39. The configuration of the brake actuator 21 in Fig. 2A-B would be, *per se*, known to one of ordinary skill in the art. It should be noted that this does not represent the only way of providing torque to the S-cam 29. For example, the brake actuator 21 may be electrically operated to provide torque to the S-cam 29, directly, or via a torque/force transfer arrangement.

When the clearance distance d indicated in Fig. 2A is smaller than intended, there is a risk that the brake linings 33a-b may come into contact with the inner surface 37 of the brake drum 35 when the drum brake 7 is not actuated. This may result in overheating of the drum brake 7. The present inventors have realized that an indication of a torque provided to the S-cam 29 indicating that there is contact between the brake linings 33a-b and the inner surface 37 of the brake drum 35, in combination with an indication of an angular displacement β of the S-cam 29 corresponding to movement of the brake shoes 31a-b that is less than the expected clearance distance d may be an indication that the drum brake 7 has been overadjusted.

Fig. 3 is an exemplary computer system 11 according to an example. Referring to Fig. 3, the computer system 11 comprises processing circuitry 13 configured to: receive a set of indications, including an indication 15 of a torque T provided to an S-cam 29 of a drum brake 7, and an indication 17 of an angular displacement β of the S-cam 29 resulting from the provided torque T; determine, based on the set of indications, that the torque T is higher than a predefined threshold torque T_{TH} indicating contact between a brake lining 33a-b of a brake shoe 31a-b actuated by the S-cam 29 and an inner surface 37 of a brake drum 35, and the angular displacement β resulting from the provided torque T is less than a predefined threshold angular displacement β_{TH} expected to result in contact between the brake lining 33a-b and the inner surface 37 of the brake drum 35; and provide a signal 19 indicating that the drum brake 7 may have been overadjusted.

The signal 19 indicating that the drum brake 7 may have been overadjusted may be provided, directly or indirectly, to an operator of the vehicle 1. For example, the signal 19 may be provided to another control unit, which may, in turn, provide an indication to the operator. The operator may be a driver of the vehicle 1, or the operator may be an autonomous drive system. In case the operator is an autonomous drive system, the autonomous drive system may, in turn, for example provide an indication to a remote device configured to allow monitoring of the operation of the vehicle 1. In response to the signal 19 from the computer system 11 that the drum brake 7 may have been overadjusted, various actions may be taken. For example, the vehicle 1 may be stopped and/or driven directly to a service location to examine the drum brakes 7 of the vehicle 1.

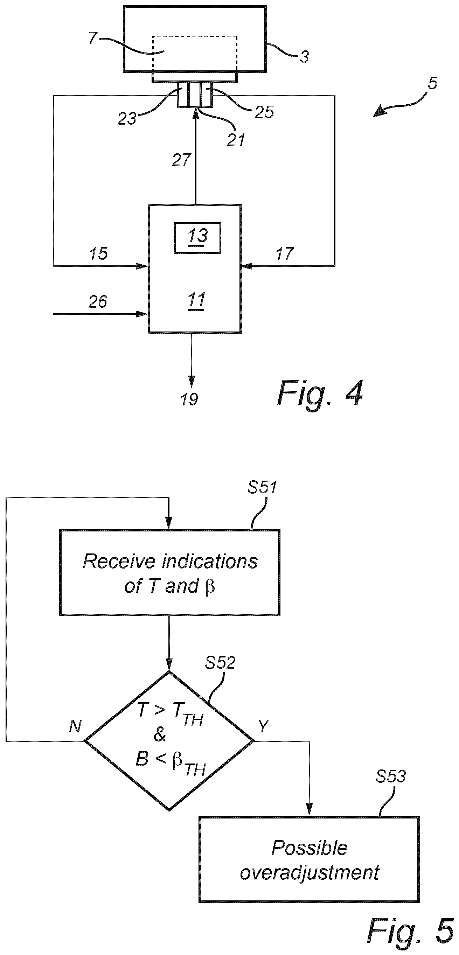

Fig. 4 is an exemplary braking system 5 according to an example. Referring to Fig. 4, and also to Fig. 2A-B and the related description further above, the exemplary braking system 5 comprises a drum brake 7 arranged to brake a vehicle wheel 3, a brake actuator 21 controllable to rotate the S-cam 29; a torque indicating arrangement 25 configured to provide an indication 17 of a torque T provided to the S-cam 29 of the drum brake 7; an angular displacement indicating arrangement 23 configured to provide an indication 15 of an angular displacement β of the S-cam 29; and a computer system 11 coupled to the torque indicating arrangement 25 and the angular displacement indicating arrangement 23. When the operator of the vehicle initiates a braking operation, a braking command 26 may be provided to the computer system 11. The braking command 26 may, for example, indicate a desired braking torque, or a desired (negative) acceleration. In response to receiving the braking command 26, the computer system 11 may provide a control signal 27 to the brake actuator 21, causing the brake actuator 21 to provide a corresponding torque to the S-cam 29 as described above with reference to Fig. 2A-B.

Fig. 5 is an exemplary method according to an example. In the following, an example method will be described with reference to the flow-chart in Fig. 5, and with additional reference to other figures as indicated below.

The method comprises receiving S51, by the processing circuitry 13 of the computer system 11 in Fig. 3 or Fig. 4, a set of indications, including an indication 15 of a torque T provided to an S-cam 29 of a drum brake 7, and an indication 17 of an angular displacement β of the S-cam 29 resulting from the provided torque T. As described further above, for example in connection with Fig. 2A-B, the nature of the indication of the torque may differ depending on how the torque is provided to the S-cam 29. If pressurized air is used to actuate the drum brake 7, by rotating the S-cam 29, then the measured or the requested air pressure P may be the indication of the torque T. If an electric motor is used to directly rotate the S-cam, then the voltage and current provided to the electric motor may be an indication of the torque T. As was also measured further above, the angular displacement β of the S-cam 29 may be measured using an angular sensor 23. As an alternative, a linear displacement of the push rod 41 may be sensed, and translated to an angular displacement β of the S-cam 29. If an electric motor is used to directly rotate the S-cam 29, the angular displacement can be received directly from the electric motor. In that case, the electric motor may thus act as brake actuator 21, torque indicating arrangement 25, and angular displacement indicating arrangement 23. The set of indications may be received regularly when the vehicle 1 is in operation, or the set of indications may be received only when the drum brakes 7 are actuated.

After having received the set of indications, the method may proceed to compare S52 the received indications with corresponding threshold values. The indicated torque T may be compared with the predefined threshold torque T_{TH} by, for example, comparing an indicated air pressure P with a predefined threshold torque P_{TH}. The indicated angular displacement β may be compared with a predefined threshold angular displacement β_{TH}.

When the comparison results in the finding that the torque T is higher than the threshold torque T_{TH}, which indicates contact between the brake linings 33a-b and the inner surface 37 of a brake drum 35, and the angular displacement β resulting from the provided torque T is equal to or greater than the predefined threshold angular displacement β_{TH}, corresponding to the expected clearance distance d, it can be concluded that the drum brake 7 has not been overadjusted, and the method returns to receiving S51 the set of indications.

When the comparison results in the finding that the torque T is higher than the threshold torque T_{TH}, which indicates contact between the brake linings 33a-b and the inner surface 37 of a brake drum 35, and the angular displacement β resulting from the provided torque T is less than the predefined threshold angular displacement β_{TH}, corresponding to the expected clearance distance d, it can be concluded that the drum brake 7 may have been overadjusted, and the method proceeds to providing S53 a signal 19 indicating that the drum brake 7 may have been overadjusted.

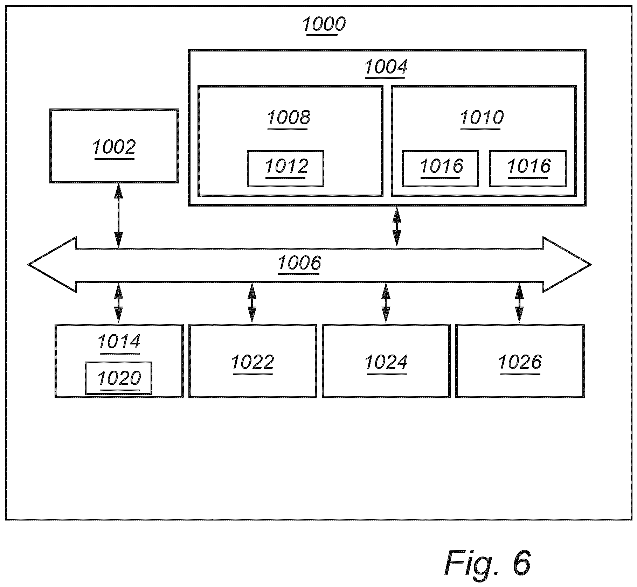

Fig. 6 is a schematic diagram of a computer system 1000 for implementing examples disclosed herein, such as for implementing examples of the computer system 11 according to examples. The computer system 1000 is adapted to execute instructions from a computer-readable medium to perform these and/or any of the functions or processing described herein. The computer system 1000 may be connected (e.g., networked) to other machines in a LAN, an intranet, an extranet, or the Internet, or by direct wired or wireless communication. While only a single device is illustrated, the computer system 1000 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 1000 may comprise at least one computing device or electronic device capable of including firmware, hardware, and/or executing software instructions to implement the functionality described herein. The computer system 1000 may include processing circuitry 1002 (e.g., processing circuitry including one or more processor devices or control units), a memory 1004, and a system bus 1006. The computer system 1000 may include at least one computing device having the processing circuitry 1002. The system bus 1006 provides an interface for system components including, but not limited to, the memory 1004 and the processing circuitry 1002. The processing circuitry 1002 may include any number of hardware components for conducting data or indication processing or for executing computer code stored in memory 1004. The processing circuitry 1002 may, for example, include a general-purpose processor, an application specific processor, a Digital indication Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 1002 may further include computer executable code that controls operation of the programmable device.

The system bus 1006 may be any of several types of bus structures that may further interconnect to a memory bus (with or without a memory controller), a peripheral bus, and/or a local bus using any of a variety of bus architectures. The memory 1004 may be one or more devices for storing data and/or computer code for completing or facilitating methods described herein. The memory 1004 may include database components, object code components, script components, or other types of information structure for supporting the various activities herein. Any distributed or local memory device may be utilized with the systems and methods of this description. The memory 1004 may be communicably connected to the processing circuitry 1002 (e.g., via a circuit or any other wired, wireless, or network connection) and may include computer code for executing one or more processes described herein. The memory 1004 may include non-volatile memory 1008 (e.g., read-only memory (ROM), erasable programmable read-only memory (EPROM), electrically erasable programmable read-only memory (EEPROM), etc.), and volatile memory 1010 (e.g., random-access memory (RAM)), or any other medium which can be used to carry or store desired program code in the form of machine-executable instructions or data structures and which can be accessed by a computer or other machine with processing circuitry 1002. A basic input/output system (BIOS) 1012 may be stored in the non-volatile memory 1008 and can include the basic routines that help to transfer information between elements within the computer system 1000.

The computer system 1000 may further include or be coupled to a non-transitory computer-readable storage medium such as the storage device 1014, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 1014 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 1014 and/or in the volatile memory 1010, which may include an operating system 1016 and/or one or more program modules 1018. All or a portion of the examples disclosed herein may be implemented as a computer program 1020 stored on a transitory or non-transitory computer-usable or computer-readable storage medium (e.g., single medium or multiple media), such as the storage device 1014, which includes complex programming instructions (e.g., complex computer-readable program code) to cause the processing circuitry 1002 to carry out actions described herein. Thus, the computer-readable program code of the computer program 1020 can comprise software instructions for implementing the functionality of the examples described herein when executed by the processing circuitry 1002. In some examples, the storage device 1014 may be a computer program product (e.g., readable storage medium) storing the computer program 1020 thereon, where at least a portion of a computer program 1020 may be loadable (e.g., into a processor) for implementing the functionality of the examples described herein when executed by the processing circuitry 1002. The processing circuitry 1002 may serve as a controller or control system for the computer system 1000 that is to implement the functionality described herein.

The computer system 1000 may include an input device interface 1022 configured to receive input and selections to be communicated to the computer system 1000 when executing instructions, such as from a keyboard, mouse, touch-sensitive surface, etc. Such input devices may be connected to the processing circuitry 1002 through the input device interface 1022 coupled to the system bus 1006 but can be connected through other interfaces, such as a parallel port, an Institute of Electrical and Electronic Engineers (IEEE) 1394 serial port, a Universal Serial Bus (USB) port, an IR interface, and the like. The computer system 1000 may include an output device interface 1024 configured to forward output, such as to a display, a video display unit (e.g., a liquid crystal display (LCD) or a cathode ray tube (CRT)). The computer system 1000 may include a communications interface 1026 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A computer system comprising processing circuitry configured to: receive a set of indications, including an indication of a torque provided to an S-cam of a drum brake, and an indication of an angular displacement of the S-cam resulting from the provided torque; determine, based on the set of indications, that the torque is higher than a predefined threshold torque indicating contact between a brake lining of a brake shoe actuated by the S-cam and an inner surface of a brake drum, and the angular displacement resulting from the provided torque is less than a predefined threshold angular displacement expected to result in contact between the brake lining and the inner surface of the brake drum; and provide a signal indicating that the drum brake may have been overadjusted.

Example 2: The computer system of example 1, wherein the processing circuitry is configured to: compare the torque with the predefined threshold torque; and compare the angular displacement with a predefined threshold angular displacement.

Example 3: The computer system of example 1 or 2, wherein: the indication of the torque provided to the S-cam includes an indication of an air pressure applied to an actuator configured to convert the applied air pressure to the torque provided to the S-cam; and the processing circuitry is configured to determine that the torque is higher than the threshold torque indicating contact between the brake lining and the inner surface of the brake drum, by determining that the air pressure is higher than a predefined threshold pressure corresponding to the threshold torque.

Example 4: The computer system of example 3, wherein the processing circuitry is configured to: compare the air pressure with the predefined threshold pressure.

Example 5: The computer system of any of examples 1-4, wherein: the indication of the angular displacement of the S-cam includes a signal from an angular sensor arranged to measure a rotational angle of the S-cam; and the processing circuitry is configured to determine that the angular displacement is less than the predefined threshold angular displacement expected to result in contact between the brake lining and the inner surface of the brake drum, by determining that the rotational angle of the S-cam is greater than a predefined rotational angle.

Example 6: The computer system of example 5, wherein the processing circuitry is configured to: compare the rotational angle with the predefined rotational angle.

Example 7: The computer system of example 6, wherein: the angular sensor is arranged to measure the rotational angle of the S-cam in relation to a reference angular position of the S-cam when no torque is provided to the S-cam; and the processing circuitry is configured to determine that the angular displacement is less than the predefined threshold angular displacement expected to result in contact between the brake lining and the inner surface of the brake drum, by determining that the rotational angle of the S-cam is greater than a predefined rotational angle in relation to the reference angular position of the S-cam.

Example 8: A braking system comprising: a drum brake including first and second brake shoes movable by rotation of an S-cam to push brake linings of the brake shoes towards an inner surface of a brake drum of the drum brake; a brake actuator controllable to rotate the S-cam; a torque indicating arrangement configured to provide an indication of a torque provided to the S-cam of the drum brake; an angular displacement indicating arrangement configured to provide an indication of an angular displacement of the S-cam; and the computer system of any of examples 1-7 coupled to the torque indicating arrangement and the angular displacement indicating arrangement.

Example 9: The braking system of example 8, wherein: the brake actuator comprises an air brake chamber, a push rod linearly movable by increasing an air pressure in the air brake chamber, and a lever arrangement coupled to the push rod and to the S-cam to convert linear movement of the push rod to rotation of the S-cam; and the torque indicating arrangement is configured to provide an indication of the air pressure in the air brake chamber.

Example 10: The braking system of example 8 or 9, wherein: the angular displacement indicating arrangement comprises an angular sensor arranged to measure a rotational angle of the S-cam.

Example 11: A vehicle comprising: at least one vehicle wheel; and the braking system of any of examples 8-10.

Example 12: A computer-implemented method, comprising: receiving a set of indications, including an indication of a torque provided to an S-cam of a drum brake, and an indication of an angular displacement of the S-cam resulting from the provided torque; determining, based on the set of indications, that the torque is higher than a threshold torque indicating contact between a brake lining of a brake shoe actuated by the S-cam and an inner surface of a brake drum, and the angular displacement resulting from the provided torque is less than a predefined threshold angular displacement expected to result in contact between the brake lining and the inner surface of the brake drum; and providing a signal indicating that the drum brake may have been overadjusted.

Example 13: The method of example 12, comprising: comparing the torque with the predefined threshold torque; and comparing the angular displacement with a predefined threshold angular displacement.

Example 14: The method of example 12 or 13, wherein: the indication of the torque provided to the S-cam includes an indication of an air pressure applied to an actuator configured to convert the applied air pressure to the torque provided to the S-cam; and the method comprises determining that the torque is higher than the threshold torque indicating contact between the brake lining and the inner surface of the brake drum, by determining that the air pressure is higher than a predefined threshold pressure corresponding to the threshold torque.

Example 15: The method of example 14, comprising: comparing the air pressure with the predefined threshold pressure.

Example 16: The method of any of examples 12-15, wherein: the indication of the angular displacement of the S-cam includes a signal from an angular sensor arranged to measure a rotational angle of the S-cam; and the method comprises determining that the angular displacement is less than the predefined threshold angular displacement expected to result in contact between the brake lining and the inner surface of the brake drum, by determining that the rotational angle of the S-cam is greater than a predefined rotational angle.

Example 17: The method of example 16, comprising: compare the rotational angle with the predefined rotational angle.

Example 18: The method of example 16, wherein: the angular sensor is arranged to measure the rotational angle of the S-cam in relation to a reference angular position of the S-cam when no torque is provided to the S-cam; and the method comprises determining that the angular displacement is less than the predefined threshold angular displacement expected to result in contact between the brake lining and the inner surface of the brake drum, by determining that the rotational angle of the S-cam is greater than a predefined rotational angle in relation to the reference angular position of the S-cam.

Example 19: A computer program product comprising program code for performing, when executed by the processing circuitry comprised in the computer system of any of examples 1-7, the method of any of examples 12-18.

Example 20: A non-transitory computer-readable storage medium comprising instructions, which when executed by the processing circuitry comprised in the computer system of any of examples 1-7, cause the processing circuitry to perform the method of any of examples 12 18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (11) comprising processing circuitry (13) configured to:
receive a set of indications, including an indication (15) of a torque (T) provided to an S-cam (29) of a drum brake (7), and an indication (17) of an angular displacement (β) of the S-cam (29) resulting from the provided torque (T);
determine, based on the set of indications, that the torque (T) is higher than a predefined threshold torque (T_{TH}) indicating contact between a brake lining (33a-b) of a brake shoe (3 1a-b) actuated by the S-cam (29) and an inner surface (37) of a brake drum (35), and that the angular displacement (β) resulting from the provided torque (T) is less than a predefined threshold angular displacement (β_{TH}) expected to result in contact between the brake lining (33a-b) and the inner surface (37) of the brake drum (35); and
provide a signal (19) indicating potential overadjustment of the drum brake (7).

2. The computer system (11) of claim 1, wherein the processing circuitry (13) is configured to:
compare the torque (T) with the predefined threshold torque (T_{TH}); and
compare the angular displacement (β) with a predefined threshold angular displacement (β_{TH}).

3. The computer system (11) of claim 1 or 2, wherein:
the indication (15) of the torque (T) provided to the S-cam (29) includes an indication of an air pressure (P) applied to an actuator (21) configured to convert the applied air pressure (P) to the torque (T) provided to the S-cam (29); and
the processing circuitry (13) is configured to determine that the torque (T) is higher than the threshold torque (T_{TH}) indicating contact between the brake lining (33a-b) and the inner surface (37) of the brake drum (35), by determining that the air pressure (P) is higher than a predefined threshold pressure (P_{TH}) corresponding to the threshold torque (T_{TH}).

4. The computer system (11) of claim 3, wherein the processing circuitry (13) is configured to:
compare the air pressure (P) with the predefined threshold pressure (P_{TH}).

5. The computer system (11) of any of claims 1-4, wherein:
the indication (15) of the angular displacement (β) of the S-cam (29) includes a signal from an angular sensor (23) arranged to measure a rotational angle (β) of the S-cam (29); and
the processing circuitry (13) is configured to determine that the angular displacement (β) is less than the predefined threshold angular displacement (β_{TH}) expected to result in contact between the brake lining (33a-b) and the inner surface (37) of the brake drum (35), by determining that the rotational angle (β) of the S-cam is greater than a predefined rotational angle (β_{TH}).

6. The computer system (11) of claim 5, wherein the processing circuitry (13) is configured to:
compare the rotational angle (β) with the predefined rotational angle (β_{TH}).

7. The computer system (11) of claim 6, wherein:
the angular sensor (23) is arranged to measure the rotational angle (β) of the S-cam (29) in relation to a reference angular position of the S-cam (29) when no torque is provided to the S-cam (29); and
the processing circuitry (13) is configured to determine that the angular displacement (β) is less than the predefined threshold angular displacement (β_{TH}) expected to result in contact between the brake lining (33a-b) and the inner surface (37) of the brake drum (35), by determining that the rotational angle (β) of the S-cam (β_{TH}) is greater than a predefined rotational angle (β_{TH}) in relation to the reference angular position of the S-cam (29).

8. A braking system (5) comprising:
a drum brake (7) including first and second brake shoes (3 1a-b) movable by rotation of an S-cam (29) to push brake linings (33a-b) of the brake shoes (3 1a-b) towards an inner surface (37) of a brake drum (35) of the drum brake (7);
a brake actuator (21) controllable to rotate the S-cam (29);
a torque indicating arrangement (25) configured to provide an indication (17) of a torque (T) provided to the S-cam (29) of the drum brake (7);
an angular displacement indicating arrangement (23) configured to provide an indication (15) of an angular displacement (β) of the S-cam (29); and
the computer system (11) of any of claims 1-7 coupled to the torque indicating arrangement (25) and the angular displacement indicating arrangement (23).

9. The braking system (5) of claim 8, wherein:
the brake actuator (21) comprises an air brake chamber (39), a push rod (41) linearly movable by increasing an air pressure (P) in the air brake chamber (39), and a lever arrangement (43) coupled to the push rod (41) and to the S-cam (29) to convert linear movement of the push rod (41) to rotation of the S-cam (29); and
the torque indicating arrangement (25) is configured to provide an indication (17) of the air pressure (P) in the air brake chamber (39).

10. The braking system (5) of claim 8 or 9, wherein:
the angular displacement indicating arrangement (23) comprises an angular sensor arranged to measure a rotational angle (β) of the S-cam (29).

11. A vehicle (1) comprising:
at least one vehicle wheel (3); and
the braking system (5) of any of claims 8-10.

12. A computer-implemented method, comprising:
receiving (S51) a set of indications, including an indication (15) of a torque (T) provided to an S-cam (29) of a drum brake (7), and an indication (17) of an angular displacement (β) of the S-cam (29) resulting from the provided torque (T);
determining (S52), based on the set of indications, that the torque (T) is higher than a threshold torque (T_{TH}) indicating contact between a brake lining (33a-b) of a brake shoe (31a-b) actuated by the S-cam (29) and an inner surface (37) of a brake drum (35), and the angular displacement (β) resulting from the provided torque (T) is less than a predefined threshold angular displacement (β_{TH}) expected to result in contact between the brake lining (33a-b) and the inner surface (37) of the brake drum (35); and
providing (S53) a signal (19) indicating that the drum brake (7) may have been overadjusted.

13. The method of claim 12, wherein:
the indication (15) of the torque (T) provided to the S-cam (29) includes an indication of an air pressure (P) applied to an actuator (21) configured to convert the applied air pressure (P) to the torque (T) provided to the S-cam (29); and
the method comprises determining (S42) that the torque (T) is higher than the threshold torque (T_{TH}) indicating contact between the brake lining (33a-b) and the inner surface (37) of the brake drum (35), by determining that the air pressure (P) is higher than a predefined threshold pressure (P_{TH}) corresponding to the threshold torque (T_{TH}).

14. The method of claim 12 or 13, wherein:
the indication (15) of the angular displacement (β) of the S-cam (29) includes a signal from an angular sensor (23) arranged to measure a rotational angle (β) of the S-cam (29); and
the method comprises determining that the angular displacement (β) is less than the predefined threshold angular displacement (β_{TH}) expected to result in contact between the brake lining (33a-b) and the inner surface (37) of the brake drum (35), by determining that the rotational angle (β) of the S-cam is greater than a predefined rotational angle (β_{TH}).

15. A computer program product comprising program code for performing, when executed by the processing circuitry (13) comprised in the computer system (11) of any of claims 1-7, the method of any of claims 12-14.
